Europäisches Patentamt

European Patent Office

Office européen des brevets

(11) Veröffentlichungsnummer: **0 309 709 B1**

(19)

(12) # EUROPÄISCHE PATENTSCHRIFT

(45) Veröffentlichungstag der Patentschrift: **04.03.92**

(21) Anmeldenummer: **88113212.0**

(22) Anmeldetag: **13.08.88**

(51) Int. Cl.5: **C04B 28/14**, B28B 1/52, //(C04B28/14,18:24)

(54) **Verfahren zum Herstellen von Gipsfaserplatten.**

(30) Priorität: **11.09.87 DE 3730585**

(43) Veröffentlichungstag der Anmeldung: **05.04.89 Patentblatt 89/14**

(45) Bekanntmachung des Hinweises auf die Patenterteilung: **04.03.92 Patentblatt 92/10**

(84) Benannte Vertragsstaaten: **AT BE CH DE ES FR GB GR IT LI LU NL SE**

(56) Entgegenhaltungen:
EP-A- 0 166 094
FR-A- 2 283 763
FR-A- 2 388 653

CHEMICAL ABSTRACTS, Band 94, Nr. 20, Mai 1981, Seite 304, Zusammenfassung Nr. 161589e, Columbus, Ohio, US; O. HIRAI et al.: "Methods for manufacture of gypsum fiberboard from powdery gypsum. Manufacture of gypsum fiberboard with dry heat treatment", & FUKUOKA-KEN FUKUSHIMA KOGYO SHIKENJO KENKYU HOKOKU 1978, 1-28

CHEMICAL ABSTRACTS, Band 92, Nr. 26,

Juni 1980, Seite 281, Zusammenfassung Nr. 219970z, Columbus, Ohio, US; & JP-A-79 159 435 (FUKUOKA PREFECTURE) 17-12-1979

(73) Patentinhaber: **BABCOCK-BSH AKTIENGE-SELLSCHAFT vormals Büttner-Schilde-Haas AG**
**Parkstrasse 29 Postfach 4 und 6**
**W-4150 Krefeld 11(DE)**

(72) Erfinder: **Vogt, Winold, Dipl.-Ing.**
**Spitalgasse 10**
**W-8803 Rothenburg o.G.(DE)**

(74) Vertreter: **Planker, Karl-Josef, Dipl.-Phys.**
**c/o Deutsche Babcock Anlagen AG Parkstrasse 29 Postfach 4 + 6**
**W-4150 Krefeld 11(DE)**

## Beschreibung

Die Erfindung richtet sich auf ein Verfahren zum Herstellen von Gipsfaserplatten, bei welchem aus naß aufgeschlossenem Fasermaterial und Calciumsulfat-Dihydrat eine Suspension bereitet, diese unter Entwässerung zu einer Platte geformt, unter Erwärmung das Dihydrat zum Halbhydrat umkristallisiert und anschließend in das Dihydrat umgewandelt wird.

Gipsfaserplatten sind plattenförmige Baukörper, die aus einer Mischung aus Gips und Faser bestehen, wobei der Anteil des Gipses überwiegt und in der Regel ca. 80 bis 90 % beträgt und die Fasern in der Regel aus Papierfasern bestehen.

Es sind Verfahren zur Herstellung solcher Gipsfaserplatten bekannt, bei denen der Gips zunächst trocken kalziniert, d.h. von Dihydrat in $\beta$-Halbhydrat überführt wird. Dabei wird ausschließlich das Halbhydrat mit entweder trocken oder naß aufbereiteten Fasern gemischt sowie das zur Hydratisierung notwendige Wasser zugegeben.

Es hat sich gezeigt, daß die mit naß aufgeschlossenen Papierfasern in Form von Pülpe hergestellten Gipsfaserplatten gegenüber dem Trockenaufschluß ca. 10 - 50 % höhere Biegefestigkeiten aufweisen. Außerdem sind die Fasern homogener in dem Plattenkern verteilt und sowohl das Aussehen als auch die Bearbeitbarkeit solcher Platten ist besser. Für die Formung derartiger Platten ist eine Suspension aus kalziniertem Gips, d. h. Halbhydrat und reiner Papierpülpe mit sehr hohem Wassergehalt von ca. 300 bis 600 % notwendig. Die Formung der Platten ist nur durch Beseitigung eines großen Wasseranteils möglich; dazu werden Siebtrommeln (Wickelverfahren) und/oder Siebbänder eingesetzt. Es hat sich bei diesem Naßverfahren jedoch gezeigt, daß die Siebflächen durch abbindenden Gips sehr schnell verschmutzen, so daß der Reinigungsaufwand erheblich und der Betrieb störanfällig ist. Um diese Nachteile des Naßverfahrens zu vermeiden, sind Verfahren vorgeschlagen worden, bei denen die Baukörper aus Dihydrat geformt werden.

So schlägt die DE-OS 26 49 300 vor, eine Suspension aus Calciumsulfat - Dihydrat und Fasern durch Entwässern zu formen und zu trocknen. Dieses Verfahren nutzt nicht die hydraulischen Bindemitteleigenschaften des Gipses, die er durch die zweimalige Umkristallisation in Halbhydrat und zurück in Dihydrat erhält. Aus diesem Grunde ist bei diesem Verfahren ohne den Zusatz von Bindemitteln keine ausreichende Plattenqualität zu erzielen.

Die DE-PS 28 18 169 beschreibt ein Verfahren zur Herstellung von Formkörpern aus Gips. Dieses Verfahren arbeitet mit Naturgips und ohne Fasern sowie mit niedrigem Wasserzusatz von 5 - 10 % des Naturgipses sowie mit hohen Pressdrücken von 6 Mpa bei der Formgebung und ist zur Erzeugung von porenarmen Gipser-zeunissen gedacht. Dieses Verfahren ist jedoch zur Erzeugung von faserhaltigen Baukörpern aus Gips und nassen Fasern technisch nicht geeignet, weil naß aufgeschlossene Papierfasern in der für Gipsfaserplatten notwendigen Menge von 10 bis 20 % nicht derart mit Rohgips gemischt werden können, daß der Wassergehalt in dem Formkörper niedrig genug, d.h. zwischen 5 und 10 % liegt. Eine Formung mittels Pressen, insbes. mit entsprechend hohen Drücken von 6 Mpa, scheidet, ebenfalls aus.

In der DE-OS 28 16 466 wird vorgeschlagen, aus einer Suspension von Dihydrat und Pülpe mittels Entwässerung eine Platte zu formen und diese unter Druck von 1,5 bis 10 bar auf Temperaturen von 115 bis 180 °C zu erhitzen. Unter diesen Bedingungen erfolgt die Umwandlung von Dihydrat in $\alpha$-Halbhydrat. Anschließend soll der Formkörper abgekühlt, unter Druck gepreßt und unter Feuchtraumbedingungen ca. 2 Stunden bis 7 Tage gelagert und danach getrocknet werden. Weil diese Lagerzeiten für einen industriellen Fertigungsprozeß zu lang und deshalb unwirtschaftlich sind, schlägt die DE-PS 34 19 558 vor, die Gips-Faser-Suspension mit einem pH-Wert < 7 einzustellen; danach soll nach der Behandlung der Platte zwischen 3 und 50 Minuten in gesättigter Atmosphäre diese Umwandlung von Dihydrat in $\alpha$-Halbhydrat, d.h. in einem Druckbehälter, die Abbindezeit sich wesentlich verkürzen. Tatsächlich hat sich allerdings herausgestellt, daß auch die Veränderung des pH-Wertes die Abbindezeiten nicht wesentlich herabgesetzt hat; sie liegt noch immer bei ca. 1 - 3 Tagen. Es liegt die Vermutung nahe, daß durch die nasse Behandlung der Platten bei Temperaturen zwischen 100° und 160°C aus den Papierfasern Stoffe frei werden, die abbindeverzögernd wirken. Durch Austausch des Wassers in der dehydratisierten Platte konnte zwar die Abbindezeit auf ca. 9 bis 12 Stunden weiter verkürzt werden, doch ist dies noch immer zu lang für eine wirtschaftliche Fertigung.

Wegen der Schwierigkeiten der vorgenannten Verfahren, die durch die Kombination der Naßformung der Platten aus einer Suspension aus Dihydrat und naß aufgeschlossenen Fasern sowie der nassen Umkristallisation dieser Platten zum $\alpha$-Halbhydrat entstehen, ist es die Aufgabe der Erfindung, durch eine neue Kombination der Naßformung mit der trockenen Umkristallisation der Platten zum Halbhydrat zu verbesserten Ergebnissen zu gelangen.

Hierzu sieht die Erfindung vor, daß zunächst eine Suspension aus Rohgips und naß aufbereiteten Fasern mit einem Wassergehalt von ca. 300 bis 600 % mittels geeigneten Vorrichtungen, z.B. einer Wickelwalze oder einer Langsiebmaschine, so weit wie möglich, d.h. auf ca. 30 - 40 % Restfeuchte, mechanisch entwässert und dabei zu Platten geformt wird, daß das Dihydrat unter Luftatmosphäre drucklos zur β-Form des Halbhydrats umkristallisiert und das zum Abbinden erforderliche Wasser durch die Platten hindurchgesaugt wird. Für die Herstellung der Gipssuspension kann sowohl Naturgips als auch chemisch gefällter Gips wie z.B. Rauchgasentschwefelungsgips oder Phosphorsäuregips eingesetzt werden, wobei sich letztere wegen ihrer besseren Entwässerungseigenschaften besonders gut eignen und, da sie bereits mit hohen Feuchtigkeitsgehalten gewonnen werden, besonders wirtschaftlich sind. Die bei der Umkristallisation zum β-Halbhydrat anfallende Platte ist praktisch völlig trocken. Von besonderem Vorteil ist der Umstand, daß die Umkristallisation bei Normaldruck und unter Luftatmosphäre erfolgt. Die bei der Entwässerung anfallende Rohplatte hat bereits eine große Stabilität, die durch den Zusammenhalt der nassen Fasern und die Formgebung mit viel Wasser erreicht wird. Das erfindungsgemäße Verfahren benötigt keine Drücke zur Formgebung der Platten; allenfalls kann man, insbesondere bei einer gewünschten höheren Plattendichte, niedrige Drücke in der Größenordnung von 0,05 bis 0,1 Mpa aufbringen, die zugleich zur Glättung der Oberfläche, zur Kalibrierung der Platten, und zu einer zusätzlichen Entwässerung nutzbar gemacht werden.

Die trockene Kalzinierung der Rohplatten findet bei Plattentemperaturen zwischen 100° und 170°C, vorzugsweise zwischen 115° und 140°C, statt. Dabei ist der Anstieg der Temperaturen während der Aufheizphase völlig unerheblich und soll zwecks schneller Kalzinierung erheblich mehr als 2°C/min betragen. Überraschenderweise kommt es bei der trockenen Kalzinierung nicht zu einer Schädigung der Papierfasern oder zu Einbußen der Plattenfestigkeit. Die Kalzinierten Platten weisen im Gegenteil eine beachtliche Eigenstabilität bei gleichzeitig hoher Elastizität auf, so daß ihr Transport beispielsweise auf Rollenförderern keine Probleme bereitet. Die Kombination der Naßformung mit der Trockenkalzinierung hat sogar den Vorteil, daß bei der Naßformung auf den Plattenoberflächen eine reine Faserfilterschicht entsteht, die die Kalziniereinrichtung vor Verschmutzung durch Gipsabrieb schützt.

Ein weiterer Verfahrensschritt besteht in dem Einbringen des zum Abbinden notwendigen Wassers in dem Plattenkern mittels Durchsaugen. Ein Aufsprühen, Eintauchen oder die Sättigung mit Wasserdampf hat sich dagegen als untauglich erwiesen, weil zwar die Trockenmasse zunächst das Wasser begierig aufsaugt, dann aber die Fasern aufquellen und das Wasser nicht tief genug in den Plattenkern eindringt. Es liegt daher im Rahmen der Erfindung, das Verfahren so durchzuführen, daß die Platten beim Durchsaugen des Wassers mit einem stöchiometrischen Überschuß geflutet werden. Vorteilhaft ist es, wenn der Wasserüberschuß mindestens das 2,5-fache, besser das 3 - 4-fache des stöchiometrischen Wasserbedarfs beträgt. Das durch die Platte hindurchgesaugte Wasser füllt Hohlräume mit Wasser aus. Durch die Saugwirkung gelangt das Wasser schnell bis in den Plattenkern und auf die Plattenunterseite. Überraschenderweise hat sich gezeigt, daß die Durchsaugzeiten je nach Plattendicke und Dichte zwischen 30 und 60 sec, also wesentlich kürzer als beim α-Verfahren, liegen, weil die trockene Platte ein größeres Porenvolumen hat und kein Wasseraustausch vorgenommen werden muß. Der Wasserüberschuß sorgt darüber hinaus dafür, daß bei Durchlässigkeitsunterschieden die Platte an allen Stellen vollständig mit Wasser getränkt wird. Die vollständige Durchtränkung der Platte mit genügend Wasser ist Voraussetzung für eine gleichmäßige vollständige Kristallumwandlung. Überraschend kurz sind die Abbindezeiten; sie betragen 1,5 bis 2,0 Stunden ohne Zugabe von Beschleunigern. Damit ist das erfindungsgemäße Verfahren im Gegensatz zu dem vorbekannten Verfahren überhaupt erst wirtschaftlich durchführbar. Schließlich ist der Durchsaugung eine Presse nachgeschaltet. Diese sorgt für eine weitere Vergleichmäßigung der Durchtränkung, für eine weitere Verdichtung der Platten, eine zusätzliche Entwässerung und Kalibrierung. Preßzeiten von 30 bis 60 sec erhöhen beispielsweise die Plattendichte um ca. 10 %.

Gegenüber dem Stand der Technik, der unter Sattdampf kalziniert und mit der α-Form des Halbhydrats arbeitet, werden somit erhebliche Vorteile erreicht. Durch die Verwendung von Sattdampf wollte man eine Austrocknung der geformten Platten vermeiden und zumindest diejenige Wassermenge in der Platte festhalten, die für die anschließende Rehydratation des Halbhydrats zum Dihydrat erforderlich ist. Hinzu kamen Gesichtspunkte der Energieersparnis, indem nämlich die für die Rehydratation benötigte Wassermenge nicht erst verdampft werden sollte, nachdem die Verdampfungswärme des Wassers außerordentlich hoch ist. Allerdings blieben diese Erwartungen weitgehend unerfüllt. Bei der Druckabsenkung, die sich an die Sattdampfbehandlung anschließt, läßt sich nur schwer vermeiden, daß das in der Platte verbliebene Wasser durch Verdampfung entweicht. Dadurch wird die Platte übertrocknet, so daß schließlich das am Ende verbleibende Wasser für die Rekristallisation vielfach nicht ausreicht. Das in der Platte verbliebene Wasser hat bei der Wärmebehandlung aus den Fasern Verunreinigungen aufgenommen, die den Abbindevorgang des Gipses dermaßen verzögern, daß dieses Verfahren infolgedessen wirtschaftlich kaum durchführbar ist. Außerdem führt die diskontinuierliche Arbeitsweise dieses Verfahrens dazu, daß der Autoklav nach jeder Wärmebehandlung abgekühlt wird. Hierdurch geht die vom Autoklaven gespeicherte Wärme verloren. Schließlich hoffte man, durch die Verwendung von α-Gips die Festigkeit der Platten zu verbessern. Man ging davon aus, daß bei der Kalzinierung unter Sattdampfatmosphäre zum α-Halbhydrat dieses beim Abbinden eine höhere Festigkeit ergibt gegenüber dem bei der Luftkalzinierung entstehenden β-Halbhydrat. Auch diese Erwartung erfüllte sich nicht. Die Festigkeit der Platten erreichte nicht diejenigen Werte, die man zunächst in Ansatz gebracht hatte.

Weitere Merkmale, Einzelheiten und Vorteile der Erfindung ergeben sich aus der folgenden Beschreibung anhand des schematisierten Stammbaums einer dem Verfahrensablauf dienenden Anlage.

Die Anlage geht davon aus, daß aus einer Entschwefelungsanlage stammender sogenannter REA-Gips aus einem Vorratslager 1 Verwendung findet. Das Ausgangsmaterial aus dem Vorrat 1 wird über einen Förderer 3 und einen Dosierer 4 einem Behälter 5 zugeführt, in welchem der Gips mit Wasser aus einem Brauchwasserbehälter 2 suspendiert wird. Die Gipssuspension wird ganz oder teilweise in einer Mühle 6, beispielsweise einer Rohrmühle oder dgl. auf die gewünschte Korngröße feingemahlen. Diese kann beispielsweise einer Blainezahl zwischen 1.000 und 3.500 entsprechen, was einem konventionell üblichen Feinheitsgrad entspricht. Von der Zerkleinerungseinrichtung 6 gelangt das fein gemahlene Material in den Silo 7.

Parallel hierzu wird aus einem Vorrat 8 Altpapier entnommen und über den Förderer 9 einer Aufschließeinrichtung 10 zugeführt, der zugleich Wasser aus dem Brauchwasserbehälter 2 zugesetzt wird. Das Altpapier wird bis in seine Fasern aufgeschlossen. An die Stelle von Altpapier können natürlich auch andere übliche Fasern pflanzlichen oder mineralischen Ursprungs treten, ohne daß dies eine grundsätzliche Änderung des Verfahrens bedeutet.

Die in der Aufschließeinrichtung 10 entstehende Pülpe aus den Faserstoffen und Wasser wird in den Vorratsbehälter 11 gefördert und von dort ebenso wie der feingemahlene Gips aus dem Silo 7 dem Mischer 12 zugeleitet. Das Gemisch aus Fasern und Gips entspricht einem den jeweiligen Anforderungen gerechtwerdenden Verhältnis. Es liegt beispielsweise in der Größenordnung von 1 : 10.

Aus dem Mischer 12 wird das Gemisch der Formgebung und gleichzeitigen Entwässerung in der Einrichtung 13 zugeführt, die beispielsweise als Langsiebmaschine mit unten und oben umlaufenden Entwässerungssiebbändern ausgerüstet ist. Die zwischen den Siebbändern geformten Platten laufen dann über den Etagenzuteiler 14 in einen Durchlaufofen 15, in welchem in einer ersten Verfahrensstufe ein Trockenvorgang erfolgt. Dieser dauert etwa 15 - 25 Minuten. Es schließt sich dann eine zweite Verfahrensstufe in Form des Kalzinierens an, wofür ebenfalls eine Zeitdauer von etwa 15 - 25 Minuten anzusetzen ist. Die unter Atmosphärendruck stehende umgewälzte Luft dient dabei als Behandlungsmedium. Die Lufttemperatur liegt in der ersten Hälfte des Durchlaufofens 15 bei etwa 250° bis 300°C, in der zweiten Hälfte hingegen bei etwa 170° bis 190°C. Die Luftfeuchtigkeit liegt damit deutlich unter dem Sättigungswert, z.B. etwa bei 0,1 bis 0,3 kg Wasser je kg Luft. Die geformten Platten laufen bei Umgebungstemperatur (z.B. etwa 20°C) in den Durchlaufofen 15 ein. Dort steigt für den ersten Verfahrensabschnitt die Temperatur der Platten durch Berührung mit der heißen Luft bis auf etwa 100°C an. Hierdurch wird die Platte jedoch nur getrocknet. Eine Kalzinierung findet praktisch nicht statt. Solange die Platte noch freies Wasser enthält, kann ihre Temperatur nicht über die Kühlgrenztemperatur ansteigen. Hat die Platte etwa die Hälfte des Ofens 15 durchlaufen, ist die freie verfügbare Feuchte auf etwa Null abgesunken. Steigt nun die Temperatur der Platte weiter an, wird die Kalzinierung in Gang gesetzt. Um dabei einen allzu starken Temperaturanstieg zu vermeiden, wird in diesem Teil des Ofens 15 die Temperatur der umgewälzten Luft niedriger gehalten. Am Ende des Durchlaufofens 15 hat die Platte eine Temperatur von etwa 130°C. Danach gelangen die getrockneten Platten auf einen Bandförderer 16, auf welchem sie mittels einer Durchsaugvorrichtung 17 bewässert werden. In dieser wird die Oberfläche der Platten möglichst schnell vollständig mit Wasser bedeckt, was durch gleichmäßiges Fluten über Flutkanäle 18 geschehen kann. Gleichzeitig sorgt eine Unterdruckkammer 17 an der Unterseite der Platten dafür, daß das Wasser möglichst schnell durch die Platten hindurchgesaugt wird. Dabei ist nur solange Wasser durchzusaugen, bis die Unterseite der Platte an allen Stellen mit Wasser befeuchtet ist. Das überschüssige durchgesaugte Wasser wird in den Brauchwasserbehälter 2 gepumpt.

Anschließend gelangen die gewässerten Platten in die Presse 19, wo sie auf ihre endgültige Dichte bzw. Dicke gepreßt und ihre Oberfläche kalibriert wird. So werden z.B. mit einer entsprechenden Einrichtung Plattendichten von 0,9 bis 1,20 kp/l bei Biegefestigkeiten von 6,0 bis 10,0 N/mm$^2$ erzielt. Die Pressenplatte ist zweckmäßig auf der Unterseite mit einem Siebband ausgerüstet, welches eine zusätzliche Entwässerung ermöglicht und ein Zerfließen der Platte bei zu schnellem Druckaufbau verhindert. Über einen Förderer 20 werden die Platten dann der Abbindestrecke 21 aufgegeben. Hier erfolgt die Verfestigung unter abschließender Umwandlung des Halbhydrats zum Dihydrat. Dieser Vorgang dauert infolge des vorgeschalteten $\beta$-Kalziniervorgangs nur 1,5 bis 2 Stunden, ohne Zugabe von irgendwelchen Abbindebeschleunigern. An einen Trockner 22 schließen sich Einrichtungen 23 und 24 zum Längs- und Quersäumen der fertigen Platten an, die dann auf den Stapel 24 abgelegt werden.

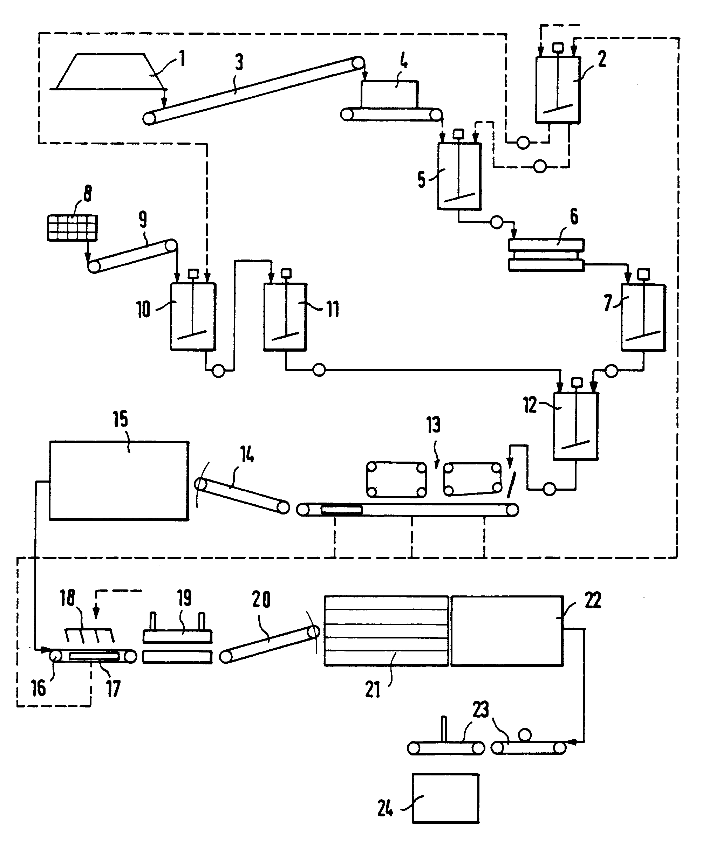

**Patentansprüche**

1. Verfahren zum Herstellen von Gipsfaserplatten, bei welchem aus naß aufgeschlossenem Fasermaterial mit Calciumsulfat-Dihydrat eine Suspension bereitet, diese unter Entwässerung zu einer Platte geformt, unter Erwärmung das Dihydrat zum Halbhydrat umkristallisiert und anschließend in das Dihydrat umgewandelt wird, dadurch gekennzeichnet, daß die Suspension mittels Entwässerungsvorrichtungen auf ca. 30 - 40 % Restfeuchte entwässert und dabei zu Platten geformt, daß das Dihydrat unter Luftatmosphäre drucklos zur $\beta$-Form des Halbhydrats umkristallisiert und das zum Abbinden erforderliche Wasser durch die Platten hindurchgesaugt wird.

2. Verfahren nach Anspruch 1, dadurch gekennzeichnet, daß die trockene Kalzinierung bei Plattentemperaturen zwischen 100° und 170° C, vorzugsweise zwischen 115° und 140° C, erfolgt.

3. Verfahren nach Anspruch 1 und 2, dadurch gekennzeichnet, daß die Platten beim Durchsaugen mit einem stöchiometrischen Wasserüberschuß geflutet werden.

4. Verfahren nach Anspruch 3, dadurch gekennzeichnet, daß der Wasserüberschuß mindestens dem 2,5-fachen des stöchiometrischen Wasserbedarfs entspricht.

5. Verfahren nach wenigstens einem der Ansprüche 1 bis 3, dadurch gekennzeichnet, daß die Platten nach dem Durchsaugen des Wassers in einer Presse kalibriert und ggf. entwässert und zusätzlich verdichtet werden.

**Claims**

1. A process for manufacturing gypsum fibre boards, in which a suspension is prepared from wet-decomposed fibre material with calcium sulphate dihydrate, the suspension is shaped into a board during dehydration, the dihydrate is dissolved and re-crystallised into hemihydrate during heating and subsequently converted into the dihydrate, characterised in that the suspension is dehydrated by means of dehydration devices to about 30 - 40 % residual moisture and during this shaped into boards; in that the dihydrate is dissolved and re-crystallised without pressure into the $\beta$ form of the hemihydrate amid air atmosphere, and the water required for setting is sucked through the boards.

2. A process according to Claim 1, characterised in that the dry calcination is done at board temperatures between 100° C and 170° C, preferably between 115° C and 140° C.

3. A process according to Claim 1 and 2, characterised in that the boards, during the through-suction, are flooded with a stoichiometric excess of water.

4. A process according to Claim 3, characterised in that the excess of water corresponds to at least 2.5 times the stoichiometric water requirement.

5. A process according to at least one of Claims 1 to 3, characterised in that the boards, after the water has been sucked through, are sized in a press and, if applicable, dehydrated and additionally compacted.

**Revendications**

1. Procédé de fabrication de panneaux de staff, dans lequel est préparée, à partir d'une matière fibreuse désagrégée par voie humide et de dihydrate de sulfate de calcium, une suspension, celle-ci étant façonnée en un panneau par déshydratation, le dihydrate étant recristallisé par chauffage en semi-hydrate et ensuite transformé en dihydrate, caractérisé en ce que la suspension est déshydratée au moyen de dispositifs de déshydratation jusqu'à approximativement 30 à 40 % d'humidité résiduelle et est alors façonnée en panneaux, en ce que le dihydrate est recristallisé sans pression à l'atmosphère de l'air en la forme $\beta$ du semi-hydrate et en ce que l'eau nécessaire pour la prise est aspirée de part en part des panneaux.

2. Procédé suivant la revendication 1, caractérisé en ce que la calcination par voie sèche a lieu pour des températures de panneaux comprises entre 100 et 170° C, de préférence entre 115 et 140°C.

3. Procédé suivant l'une ou l'autre des revendications 1 et 2, caractérisé en ce que les panneaux sont inondés avec un excès stoechiométrique d'eau lors de l'aspiration traversante de part en part.

4. Procédé suivant la revendication 3, caractérisé en ce que l'excès d'eau comporte au moins 2,5 fois le besoin stoechiométrique en eau.

5. Procédé suivant l'une quelconque des revendications 1 à 3, caractérisé en ce que les panneaux, après l'aspiration traversante de l'eau, sont calibrés dans une presse et éventuellement déshydratés et en outre comprimés.